# EUROPEAN PATENT APPLICATION

(11) **EP 4 191 432 A1**
(43) Date of publication of application: **07.06.2023**
(21) Application number: 20910926.3
(22) Date of filing: 28.08.2020
(51) Int. Cl.: G06F 16/29

(54) **METHOD AND APPARATUS FOR GIS POINT DATA RENDERING, COMPUTER DEVICE, AND STORAGE MEDIUM**

(30) Priority: 27.07.2020 CN 202010733018
(71) Applicant: Ping An Technology (Shenzhen) Co., Ltd., Shenzhen Guangdong 518033 (CN)
(72) Inventor: HOU, Li, Shenzhen, Guangdong 518033 (CN); LIU, Xiang, Shenzhen, Guangdong 518033 (CN)
(74) Representative: dompatent von Kreisler Selting Werner - Partnerschaft von Patent- und Rechtsanwälten mbB
(86) International application number: PCT/CN2020/111978
(87) International publication number: WO 2021/135325

(57) **Abstract**

The present application relates to a method for rendering GIS point data and pertains to the technical field of artificial intelligence, this method includes: receiving a rendering instruction that carries a geographic region range to be rendered; selecting GIS point data corresponding to the geographic region range; generating, by a canvas object generation thread, a canvas object corresponding to the selected GIS point data; and displaying the generated canvas object on a current screen in a display thread, continuing to obtain a remaining GIS point data, and generating a canvas object corresponding to the remaining GIS point data by the canvas object generation thread, when or after the canvas object is displayed.

## Description

### CROSS-REFERENCE TO RELATED APPLICATION

This application claims priority to Chinese patent application No. 202010733018.8 filed with CNIPA on July 27, 2020 and entitled "method and device for rendering GIS point data, computer device and storage medium", the contents each of which are incorporated herein by reference thereto.

### TECHNICAL FIELD

The present application relates to the technical field of artificial intelligence, and particularly relates to a method for rendering GIS point data, a device for rendering GIS point data, a computer device and a storage medium.

### BACKGROUND

With the development of information technology, geographic information system technology is developed, the GIS (Geographic Information System) is a computer system for collecting, storing, managing, processing, analyzing, displaying and applying geographic data. A canvas object in a browser is an HTML5 element for drawing an image using a script computer language, which is commonly referred to as a canvas object, the canvas object is used for rendering an image in a browser, point data is composed of one or more pairs of coordinates and is a set of discrete spatial points with geographic coordinate information.

In the conventional technology, GIS point data of the browser is rendered by reading the identifier and the spatial geographic coordinates that are common to the GIS point data in various formats, then, the corresponding graphic file is obtained, the identifier and the spatial geographic coordinate, and the graphic file are packaged into the canvas object, fin ally, canvas objects in the range of the current screen are rendered in batches merely.

However, the inventor has realized that, in the above-described method, all canvas objects need to be calculated first, then, whether these canvas objects are in the range of the current screen or not is determined, if one canvas object is not in the range of the display, this canvas object is not displayed, the canvas objects which are in the range of the current screen are displayed merely, in this way, time is spent on calculating redundant canvas objects, and a display efficiency is reduced.

### SUMMARY

According to the various embodiments of the present application, a method for rendering GIS point data, a device for rendering GIS point data, a computer device and a storage medium are provided.

A method for rendering GIS point data includes:
receiving a rendering instruction that carries a geographic region range to be rendered;
selecting GIS point data corresponding to the geographic region range;
generating a canvas object corresponding to the selected GIS point data in a canvas object generation thread; and
displaying the generated canvas object on a current screen in a display thread, and continuing to obtain a remaining GIS point data, and generating a canvas object corresponding to the remaining GIS point data by the canvas object generation thread, when or after the canvas object is displayed.

A device for rendering GIS point data includes:
a receiving module configured to receive a rendering instruction that carries a geographic region range to be rendered;
a selection module configured to select GIS point data corresponding to the geographic region range;
a generation module configured to generate a canvas object corresponding to the selected GIS point data by a canvas object generation thread; and
a display module configured to display the generated canvas object on a current screen in a display thread, and continue to obtain the remaining GIS point data and generate a canvas object corresponding to the remaining GIS point data by the canvas object generation thread, when or after the canvas object is displayed.

A computer readable instruction, a computer readable instruction, a computer readable instruction, a computer readable instruction, a computer device, including a memory and one or a plurality of processor(s), the memory stores a computer readable instruction, that, when being executed by the one or plurality of processor(s), causes the one or plurality of processor(s) to perform following steps of:
receiving a rendering instruction that carries a geographic region range to be rendered;
selecting GIS point data corresponding to the geographic region range;
generating a canvas object corresponding to the selected GIS point data by a canvas object generation thread; and
displaying the generated canvas object on a current screen in a display thread, and continuing to obtain a remaining GIS point data and generating a canvas object corresponding to the remaining GIS point data by the canvas object generation thread, when or after the canvas object is displayed.

One or plurality of computer readable storage medium which stores a computer readable instruction, that, when being executed by one or plurality of processor(s), cause the one or plurality of processor(s) to perform following steps of:
receiving a rendering instruction that carries a geographic region range to be rendered;
selecting GIS point data corresponding to the geographic region range;
generating, by a canvas object generation thread, a canvas object corresponding to the selected GIS point data; and
displaying the generated canvas object on a current screen in a display thread, and continuing to obtain a remaining GIS point data and generating a canvas object corresponding to the remaining GIS point data by the canvas object generation thread when or after the canvas object is displayed.

In the method and device for rendering GIS point data, the computer device and the storage medium, the corresponding canvas object is preferably generated according to the geographic region range to be displayed on the current screen, and is displayed, and the remaining GIS point data is continued to be obtained and the canvas object corresponding to the remaining GIS point data is generated by execution of the canvas object generation thread, after the canvas object is displayed, such that a displaying efficiency is improved.

The details of one or more embodiments of the present application are described in the accompanying drawings and the description below. Other features and advantages of the present application will become apparent from the description, the accompanying drawings and the claims.

### BRIEF DESCRIPTION OF THE DRAWINGS

In order to describe the embodiments of the present application more clearly, a brief introduction regarding the accompanying drawings that need to be used for describing the embodiments of the present application is given below; it is apparent that the accompanying drawings described below are only some embodiments of the present application, a skilled person in the art can also obtain other drawings according to the current drawings without paying creative labor.
FIG. 1 illustrates a flow diagram of a method for rendering GIS point data by one or a plurality of embodiment(s) of the present application;
FIG. 2 illustrates a diagram of distribution of GIS point data provided by one or a plurality of embodiment(s) of the present application;
FIG. 3 illustrates a block diagram of a device for rendering GIS point data according to one or a plurality of embodiment(s) of the present application;
FIG. 4 illustrates a structural block diagram of a computer device provided by one embodiment of the present application.

### DESCRIPTION OF THE EMBODIMENTS

In order to make the technical solutions and the advantages of the present application be clearer and more understandable, the present application will be further described in detail below with reference to the accompanying figures and the embodiments. It will be appreciated that the embodiments described in detail herein are merely intended to illustrate but not to limit the present application.

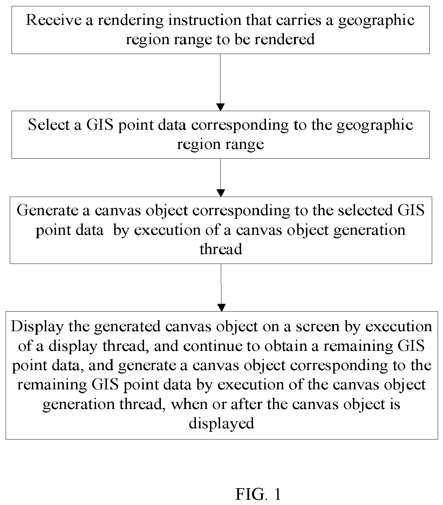

In one embodiment, as shown in FIG. 1, a method for rendering GIS (Geographic Information System) point data is provided. The embodiment is described by taking the method applied in a terminal device as an example. It should be understood that, this method may also be applied in a server and may also be applied in a system including the terminal device and the server, and is realized by the interaction between the terminal device and the server. In this embodiment, the method includes the following steps:
At step S102, a rendering instruction that carries a geographic region range to be rendered is received.

Specifically, the rendering instruction is an instruction input to a display terminal by the user, such as an instruction of displaying a certain type of map by clicking a button, or an instruction for zooming-in a map or zooming-out a map, or an instruction of adjusting a display range of a map by moving the map. The rendering instruction carries a geographic region range of a map to be displayed. For example, if the rendering instruction is the instruction of displaying a certain type of map by clicking a certain button, a complete area planning map such as the whole country or some province is displayed by default; the display terminal determines a relative displacement of a region by obtaining a mouse input displacement corresponding to the zoom-out or zoom-in instruction, and thereby determining a new geographic region range according to the original geographical area range and the relative displacement, if the rendering instruction is the instruction for zooming-in or zooming-out the map; the display terminal determines the relative displacement of the region by acquiring the displacement of the mouse, and thereby determining a new geographic region range according to the original geographical area range and the relative displacement, if the rendering instruction is the instruction of adjusting the display range of the map by moving the map.

At step 104, GIS point data is selected corresponding to the geographic region range.

Specifically, the GIS point data may be displayed in various formats such as Excel, CSV and GeoJSON, the display terminal reads GIS point data in the various formats, including location identifiers and geographic location coordinates. In this way, the display terminal may select the corresponding GIS point data (i.e., the GIS point data in the display range) according to the geographic region range and the geographic position coordinates corresponding to the various GIS point data. Moreover, optionally, the step of extracting GIS point data from the files in the various formats may be performed in advance, so that the display terminal may store the extracted GIS point data, which facilitates the subsequent step of selecting the GIS point data corresponding to the geographic region range.

It should be emphasized that, the GIS point data may also be stored in a node of a blockchain so as to further ensure the privacy and the security of the GIS point data.

At step S106, a canvas object corresponding the selected GIS point data is generated by execution of a canvas object generation thread.

Specifically, the canvas object generation thread is mainly used for generating a canvas object corresponding to each of the GIS point data, for example, a canvas object of a provincial capital city may be presented by a small star icon, in this way, in the execution of the canvas object generation thread, the display terminal encapsulates the GIS point data and the small star icon to obtain the canvas object representing the provincial capital city. Optionally, the display terminal further needs to acquire a size of the current display screen so as to determine a size of the canvas object by determining a ratio of the size of the geographic region range to the size of the current display screen.

At step S108, the generated canvas object is displayed in the current screen during execution of a display thread, and the remaining GIS point data is continued to be obtained, and canvas objects corresponding to the remaining GIS point data is generated by execution of the canvas object generation thread, when or after the canvas object is displayed or after the canvas object is displayed.

Specifically, after generating the corresponding canvas objects , the display terminal displays canvas objects in the current screen in batches to complete display, and when or after displaying the canvas objects, the remaining GIS point data is obtained subsequently and the canvas objects corresponding to the remaining GIS point data are generated by the canvas object generation thread.

According to the method for rendering GIS point data, the corresponding canvas objects are preferentially generated according to the geographic region range to be displayed by the current screen, and are displayed simultaneously, the remaining GIS point data is continued to be obtained and the corresponding canvas objects are generated when or after the canvas objects are displayed, such that a display efficiency can be improved.

In one embodiment, a step of continuing to obtain the remaining GIS point data and generate corresponding canvas objects by execution of the canvas object generation thread includes: obtain new GIS point data from the remaining GIS point data in an ascending order of distances from the geographic region range and generate a new canvas object according to the obtained new GIS point data, by execution of the canvas object generation thread.

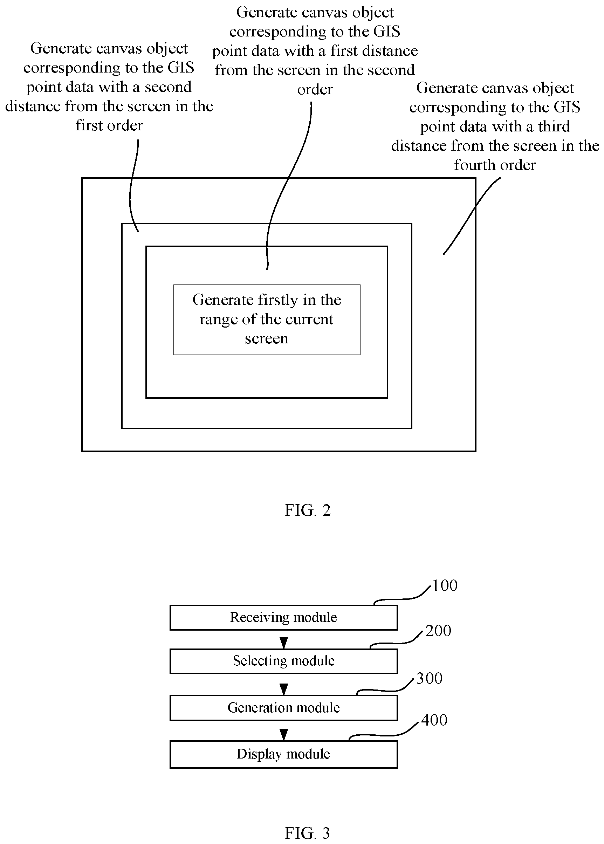

Specifically, the canvas object generation thread may obtain GIS point data in an ascending order of distances from the geographic region range, and generate a corresponding canvas object, in particular, the display terminal obtains the GIS point data in the ascending order of distances from the geographic region range, and determines a set of classifications to which the GIS point data pertains, if the GIS point data pertains to a set of known classifications, a graphic file corresponding to the set is directly obtained to generate a canvas object; if the GIS point data does not pertains to a set of known classifications, a new set is created, and a graphic file corresponding to the new set is obtained to generate a corresponding canvas object. The detail of the process can be referred to FIG. 2, for example, the canvas object which corresponds to the GIS point data of the geographic region range that corresponds to the current screen area is preferentially generated, then, the GIS point data of the area having a first distance from the current screen is obtained, so that a canvas object corresponding to the GIS point data is generated in the second order. Then, the GIS point data of the area having a second distance from the screen is obtained, so that the canvas object corresponding to the GIS point data is generated in the third order. Fin ally, GIS point data of a region having a third distance from the screen is obtained, so that the corresponding canvas object corresponding to the GIS point data is generated in the fourth order.

This set of classifications herein refers to a set of classified GIS point data, which can be such as a provincial capital city and a non-provincial capital city.

In this embodiment, the GIS point data may be obtained in an ascending order of distances from the geographic region range by the canvas object generation thread, so that the canvas objects corresponding to the GIS point data in the geographic region range are generated and displayed preferentially, then, the GIS point data is continued to be obtained in the ascending order of distances, and the canvas objects are generated, so that displaying of the canvas objects is facilitated.

In one embodiment, a method for generating canvas object includes: classify the obtained GIS point data according to a preset classification; obtain a set corresponding to the related classifications, and select a graphic file corresponding to the obtained set; and encapsulate the graphic file with the GIS point data in the corresponding sets to obtain canvas objects.

Specifically, after the GIS point data corresponding to the geographic region range is obtained, the method may further include the step of classifying the selected GIS point data, for example, classifying the GIS point data into provincial capital cities and a non-provincial capital cities, etc. In another embodiment, different classification sets may be obtained by classifying the GIS point data according to a preset classification. In this way, the step of generating the canvas object according to the selected GIS point data by execution of the canvas object generation thread may include: obtain the related classification sets, select a graphic file corresponding to the related classification set, and encapsulate the graphic file with each GIS point data in the corresponding classification sets to obtain the canvas object.

In this embodiment, the GIS point data is classified firstly, so that the graphic files corresponding to the classifications are obtained, when a canvas object needs to be generated, a corresponding graphic file is directly obtained.

In one embodiment, after displaying the generated canvas object on the current screen in the display thread, the method further includes: store the canvas object displayed in the current screen in a memory. After selecting the GIS point data corresponding to the geographic region range, the method further includes: determine whether the GIS point data corresponding to the geographic region range corresponds to the canvas object stored in the memory; directly read the corresponding canvas object from the memory if the GIS point data corresponding to the geographic region range corresponds to the canvas object stored in the memory; or continue to generate the canvas object corresponding to the selected GIS point data by execution of the canvas object generation thread.

Specifically, after displaying is completed, the display terminal stores the generated canvas object in the memory, so that the display terminal determines whether the GIS point data corresponding to the geographic region range corresponds to the canvas object stored in the memory after the corresponding GIS point data is selected according to the geographic region range, if the GIS point data corresponds to the canvas object stored in the memory, the corresponding canvas object is directly read from the memory; the step of continuing to generate the canvas object corresponding to the selected GIS point data by execution of the canvas object generation thread is continued to be performed.

This embodiment relates to displaying of incremental data, that is, the GIS point data that has been displayed is pre-stored in the memory, so that after the map is zoomed-out or moved, whether a corresponding canvas object of the GIS point that corresponds to the new geographic region range has been generated can be determined first, if the corresponding canvas object of the GIS point is generated, this new generated canvas object is directly obtained, and there is no need to generate canvas object again, so that the efficiency is improved.

In one embodiment, determining whether the GIS point data corresponding to the geographic region range corresponds to the canvas object stored in the memory includes: compare the geographic region range with a geographic region range that corresponds to the stored canvas to obtain an overlapped region; determine whether there is GIS point data in the overlapped region, extract a canvas object corresponding to the GIS point data in the overlapped region from the memory, and continue to query whether there exists a canvas object corresponding to a GIS point data in an unoverlapped region in the memory.

Specifically, in this embodiment, the step of determining whether the GIS point data corresponding to the geographic region range corresponds to the canvas objects stored in the memory can be obtaining new geographic region range after operation, comparing the new geographic region range with the geographic region range that corresponds to the stored canvas object to obtain the overlapped region, determining whether there exists GIS point data in the overlapped geographic region, and obtaining the corresponding canvas object stored in the memory according to the overlapped geographic region if there exists the GIS point data in the overlapped geographic region; regarding the unoverlapped region, obtaining GIS point data in the unoverlapped region, and then querying whether there exists a canvas object corresponding to the GIS point data in the memory, directly obtaining the canvas object if there exists the canvas object corresponding to the GIS point data in the memory, or preferentially generating canvas object if there doesn't exist a canvas object corresponding to the GIS point data in the memory.

In this embodiment, regarding the GIS point data in the overlapped region, the canvas object corresponding to the GIS point data may be directly obtained, however, regarding the GIS point data in the unoverlapped region, the canvas object is obtained by querying the memory, so that the efficiency is improved.

In one embodiment, before determining whether the GIS point data corresponding to the geographic region range corresponds to the canvas object stored in the memory, the method further includes steps of: determine whether all canvas objects corresponding to the GIS point data have been generated; and read the canvas objects corresponding to the GIS point data from the memory directly.

Specifically, the step of determining whether the GIS point data corresponding to the geographic region range corresponds to the canvas object stored in the memory can also be : determining whether all canvas objects corresponding to the GIS point data have been generated, that is, whether generation of all canvas objects corresponding to the GIS point data has been completed by execution of the canvas object generation thread, if the generation of all canvas objects corresponding to the GIS point data has been completed, the corresponding canvas object may be obtained by directly querying the memory, if the generation of all canvas objects corresponding to the GIS point data has not yet been completed, a new geographic region range after the operation is continued to be obtained, and the steps of comparing the two geographic region ranges is performed.

In this embodiment, whether the canvas objects corresponding to all the GIS point data have been generated is determined first, if the canvas objects corresponding to all the GIS point data have been generated, the canvas object corresponding to the GIS point data is directly read from the memory without being generated again, so that the processing efficiency is further improved.

In one embodiment, the method for rendering GIS point data further includes: determine a degree of adjustment corresponding to the zoom instruction after a zoom instruction is received; obtain a original graphic size of each of graphic files corresponding to the various sets; adjust the original graphic size according to the degree of adjustment to obtain a new graphic file; and replace the original graphic file with the new graphic file.

Specifically, due to the existence of zoom-in or zoom-out operation on the map, the size of the graphic in the graphic file in the corresponding canvas object needs to be changed, therefore, when the display terminal receives the zoom-in or zoom-out instruction, a degree of adjustment of image corresponding to the zoom-in or zoom-out instruction is obtained, in particular, the degree of adjustment of image equalizes a division of the original display size by the new display size, then, the original graphic size of the graphic file corresponding to each classified set is obtained, then, the new graphic file is obtained according to the degree of adjustment of image and the original graphic size of the graphic file, the new graphic file is obtained according to the size of the new graphic file, and the graphic file corresponding to each of the related sets of classifications (i.e., the sets of classifications related to the regions corresponding to the various GIS point data that can be displayed by the current display) is replaced with the new graphic file, and the new graphic file is displayed, so that the display efficiency is improved.

The blockchain in the embodiments is directed to a new application mode of computer technologies such as distributed data storage, point-to-point transmission, consensus mechanism, encryption algorithm, and the like. Blockchain is essentially a decentralized database which is a series of data blocks, and the blockchain is generated by associating these data blocks using cryptographic methods, each of these data blocks contains information of a batch of network transactions which are used for verifying the validity (anti-counterfeiting) of the information and generating a next data block. The blockchain may include a blockchain bottom layer platform, a platform product service layer, and an application service layer, etc.

It should be understood that, although the steps in the flow diagram of FIG. 1 are displayed sequentially according to the indication of the arrows, these steps are not necessarily performed in the order indicated by the arrows. The execution of these steps is not strictly limited unless being explicitly stipulated herein, and these steps can be performed in other order. Moreover, at least a part of the steps in FIG. 1 can include a plurality of steps or phases, and these steps or phases are not necessarily performed at the same time, instead, these steps or phases can be performed at different moments, the order of execution of these steps or phases is not necessarily performed in order, instead, the order of execution of these steps or phases can be performed in turn or alternately with other steps or at least a part of steps or phases in other steps.

In one embodiment, as shown in FIG. 3, a device for rendering GIS point data is provided, this device includes:
a receiving module 100 configured to receive a rendering instruction that carries a geographic region range to be rendered;
a selection module 200 configured to select GIS point data corresponding to the geographic region range;
a generation module 300 configured to generate a canvas object corresponding to the selected GIS point data by execution of a canvas object generation thread; and
a display module 400 configured to display the generated canvas object on a current screen by a display thread, and continue to obtain a remaining GIS point data and generate a canvas object corresponding to the remaining GIS point data by the canvas object generation thread, when or after the canvas object is displayed.

In one embodiment, the display module 400 may include:
a sequentially obtaining module configured to obtain a new GIS point data from the remaining GIS point data in an ascending order of distance from the geographic region range by the canvas object generation thread; and
a generation unit configured to generate a new canvas object according to the obtained new GIS point data.

In one embodiment, the device for rendering GIS point data may include:
a classification module configured to classify the obtained GIS point data according to a preset classification; and
a graphic file obtaining module configured to obtain sets corresponding to classifications , and select graphic files corresponding to the obtained sets; and
an encapsulation module configured to encapsulate the graphic files and GIS point data in the corresponding sets to obtain the canvas object.

In one embodiment, the device for rendering GIS point data may include:
a storage module configured to store the canvas object displayed on the current screen in a memory;
a determination module configured to: determine whether the GIS point data corresponding to the geographic region range corresponds to the canvas object stored in the memory; and read the corresponding canvas object from the memory directly when the GIS point data corresponding to the geographic region range corresponds to the canvas object stored in the memory; or continue to generate the canvas object corresponding to the selected GIS point data by execution of the canvas object generation thread, when the GIS point data corresponding to the geographic region range does not correspond to the canvas object stored in the memory.

In one embodiment, the determination module may include:
an overlapped region obtaining unit configured to compare the geographic region range with a geographic region range corresponding to a stored canvas to obtain an overlapped region;
a first determination unit configured to determine whether there is a GIS point data in the overlapped region; and
a processing unit configured to extract the canvas object corresponding to the GIS point data in the overlapped region from the memory, and continue to query whether there exists a canvas object corresponding to a GIS point data in an unoverlapped region in the memory, if there is the GIS point data in the overlapped region.

In one embodiment, the determination module may further include:
a second determination unit configured to: determine whether all canvas objects corresponding to the GIS point data have been generated, and read the canvas objects corresponding to the GIS point data from the memory directly, if all canvas objects corresponding to the GIS point data have been generated.

In one embodiment, the device for rendering GIS point data may include:
a calculation module configured to determine, when a zoom instruction is received, a degree of adjustment corresponding to the zoom instruction;
original graphic size obtaining module configured to obtain an original graphic size of each of the graphic files corresponding to the data sets;
an adjustment module configured to adjust the original graphic size according to the degree of adjustment to obtain a new graphic file; and
a replacement module configured to replace the original graphic file with the new graphic file.

Regarding the detail description of the device for rendering GIS point data, reference can be made to the descriptions of the method for rendering GIS point data, the details of the device for rendering GIS point data are not repeatedly described herein. A whole or some of the modules in the device for rendering GIS point data may be implemented by software, hardware, and a combination of software and hardware. These modules may be embedded in or independent of the processor in the computer device in a form of hardware, These modules may also be stored in the memory of the computer device in a form of software, so that the processor is facilitated to invoke the operations corresponding to these modules.

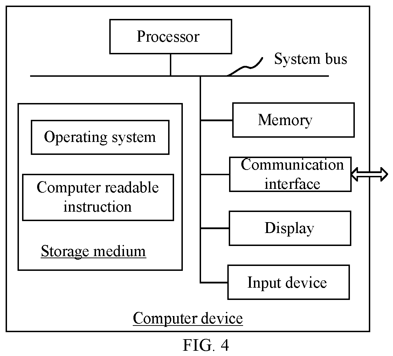

In one embodiment, a computer device is provided, this computer device may be a terminal device, and a diagram of the internal structure of the computer device may be as shown in FIG. 4. The computer device includes a processor, a memory, a communication interface, a display screen and an input device, which are connected through a system bus. The processor of the computer device is configured to provide computing and control capabilities. The memory of the computer device includes a non-volatile storage medium or a volatile storage medium, and an internal memory. The non-volatile storage medium or the volatile storage medium stores an operating system and a computer readable instruction. The internal memory provides an environment for operating the operating system and the computer readable instructions in the non-volatile storage medium. The communication interface of the computer device is configured to communicate with external terminal devices in a wired or wireless manner, and the wireless manner may be implemented by Wi-Fi, a carrier's network, an NFC (Near Field Communication), or other technologies. The computer readable instructions is configured to, when being executed by a processor, implement a method for rendering GIS point data. The display screen of the computer device may be a LCD (Liquid Crystal Display) screen or be an electronic ink display screen. The input device of the computer device may be a touch layer covered on the display screen, the input device may also be a key, a trackball, or a touch pad provided on the housing of the computer device, the input device may also be an external keyboard, a touchpad, a mouse, etc.

The person of ordinary skill in the art will be appreciated that, the structure shown in FIG. 4 is only a block diagram of a structure of some parts associated with the technical solutions of the present application, and should not be constituted as limitations to the computer device which the technical solutions of the present application are applied on, the specific computer device may include more or less components than the components shown in FIG. 4, or combine some components, or has different components with different arrangements.

A computer device, including a memory and one or a plurality of processor(s), the memory stores a computer readable instruction, that, when being executed by the one or plurality of processor(s), causes the one or plurality of processor(s) to perform following steps of:
receiving a rendering instruction that carries a geographic region range to be rendered;
selecting GIS point data corresponding to the geographic region range;
generating a canvas object corresponding to the selected GIS point data by a canvas object generation thread; and
displaying the generated canvas object on a current screen in a display thread, and continuing to obtain a remaining GIS point data and generating a canvas object corresponding to the remaining GIS point data by the canvas object generation thread when or after the canvas object is displayed.

In one embodiment, the step of continuing to obtain the remaining GIS point data and generating the canvas object corresponding to the remaining GIS point data by the canvas object generation thread, which is realized by the processor(s) by executing the computer readable instruction, comprises steps of:
obtaining a new GIS point data from the remaining GIS point data in an ascending order of distance from the geographic region range by execution of the canvas object generation thread; and
generating a new canvas object according to the obtained new GIS point data.

In one embodiment, an approach of generating the canvas object, which is realized by the processor(s) by executing the computer readable instruction, comprises:
classifying the obtained GIS point data according to a preset classification; and
obtaining sets corresponding to classifications of the obtained GIS point data, and selecting graphic files corresponding to the obtained sets; and
encapsulating the graphic file with GIS point data in the sets corresponding to the classifications to obtain the canvas object.

In one embodiment, after displaying the generated canvas object on the current screen by the display thread, which is realized by the processor(s) by executing the computer readable instruction, the method further comprises:
storing the canvas object displayed on the current screen in a memory;
after selecting the corresponding GIS point data according to the geographic region range,
determining whether the GIS point data corresponding to the geographic region range corresponds to the canvas object stored in the memory; and
reading the corresponding canvas object from the memory directly when the GIS point data corresponding to the geographic region range corresponds to the canvas object stored in the memory, otherwise, continuing to generate, by the canvas object generation thread, the canvas object corresponding to the selected GIS point data.

In one embodiment, the determining whether the GIS point data corresponding to the geographic region range corresponds to the canvas object stored in the memory, which is realized by the processor(s) by executing the computer readable instruction, comprises:
comparing the geographic region range with a geographic region range corresponding to a stored canvas to obtain an overlapped region;
determining whether there is a GIS point data in the overlapped region; and
extracting, if there is the GIS point data in the overlapped region, the canvas object corresponding to the GIS point data in the overlapped region from the memory and continuing to query whether there exists a canvas object corresponding to a GIS point data in an unoverlapped region in the memory.

In one embodiment, before determining whether the GIS point data corresponding to the geographic region range corresponds to the canvas object stored in the memory, the method further comprises:
determining whether all canvas objects corresponding to the GIS point data have been generated; and
reading the canvas objects corresponding to the GIS point data from the memory directly, if all canvas objects corresponding to the GIS point data have been generated.

In one embodiment, when executing the computer readable instruction, the processor(s) is/are further configured to perform following steps of:
determining, when a zoom instruction is received, a degree of adjustment corresponding to the zoom instruction;
obtaining an original graphic size of each of the graphic files corresponding to the data sets;
adjusting the original graphic size according to the degree of adjustment to obtain a new graphic file; and
replacing the original graphic file with the new graphic file.

One or a plurality of computer readable storage medium which stores a computer readable instruction, that, when being executed by one or plurality of processor(s), cause the one or plurality of processor(s) to perform following steps of:
receiving a rendering instruction that carries a geographic region range to be rendered;
selecting GIS point data corresponding to the geographic region range;
generating, by a canvas object generation thread, a canvas object corresponding to the selected GIS point data; and
displaying the generated canvas object on a current screen in a display thread, and continuing to obtain a remaining GIS point data and generating a canvas object corresponding to the remaining GIS point data by the canvas object generation thread when or after the canvas object is displayed.

In one embodiment,, which is realized by the processor(s) by executing the computer readable instruction, comprises steps of: continuing to obtain the remaining GIS point data and generating the canvas object corresponding to the remaining GIS point data by the canvas object generation thread
obtaining a new GIS point data from the remaining GIS point data in an ascending order of distance from the geographic region range by execution of the canvas object generation thread; and
generating a new canvas object according to the obtained new GIS point data.

In one embodiment, an approach of generating the canvas object, which is realized by the processor(s) by executing the computer readable instruction, comprises:
classifying the obtained GIS point data according to a preset classification; and
obtaining a set corresponding to a classification of the obtained GIS point data, and selecting a graphic file corresponding to the obtained set; and
encapsulating the graphic file with GIS point data in the sets corresponding to the classifications to obtain the canvas object.

In one embodiment, after displaying the generated canvas object on the current screen by the display thread, which is realized by the processor(s) by executing the computer readable instruction, the method further comprises: storing the canvas object displayed on the current screen in a memory; after selecting the corresponding GIS point data according to the geographic region range, determining whether the GIS point data corresponding to the geographic region range corresponds to the canvas object stored in the memory; and reading the corresponding canvas object from the memory directly when the GIS point data corresponding to the geographic region range corresponds to the canvas object stored in the memory, otherwise, continuing to generate the canvas object corresponding to the selected GIS point data by the canvas object generation thread.

In one embodiment, determining whether the GIS point data corresponding to the geographic region range corresponds to the canvas object stored in the memory, which is realized by the processor(s) by executing the computer readable instruction, comprises: comparing the geographic region range with a geographic region range corresponding to a stored canvas to obtain an overlapped region; determining whether there is a GIS point data in the overlapped region; and extracting, if there is the GIS point data in the overlapped region, the canvas object corresponding to the GIS point data in the overlapped region from the memory, and continuing to query whether there exists a canvas object corresponding to a GIS point data in an unoverlapped region in the memory.

In one embodiment, before determining whether the GIS point data corresponding to the geographic region range corresponds to the canvas object stored in the memory, which is realized by the processor(s) by executing the computer readable instruction, :determining whether all canvas objects corresponding to the GIS point data have been generated; and reading the canvas objects corresponding to the GIS point data from the memory directly, if all canvas objects corresponding to the GIS point data have been generated.

In one embodiment, when executing the computer readable instruction, the processor(s) is/are further configured to perform following steps of:
determining, when a zoom instruction is received, a degree of adjustment corresponding to the zoom instruction; obtaining an original graphic size of each of the graphic files corresponding to the data sets; adjusting the original graphic size according to the degree of adjustment to obtain a new graphic file; and replacing the original graphic file with the new graphic file.

The person of ordinary skilled in the art may be aware of that, a computer program can be used to instruct relevant hardware to accomplish a whole or a part of the flow process for implementing the method embodiments of the present application. The computer program may be stored in a computer readable storage medium, when the computer program is executed, the steps in the various method embodiments described above may be included. Any reference to the memory, the storage, the databases, or other media used in the embodiments provided by the present application may include at least one of the non-volatile memory and the volatile memory. The non-volatile memory may include ROM (Read Only Memory), magnetic tap, floppy disk, flash memory or optical memory. The volatile memory may include RAM (Random Access Memory) or external cache memory. By way of illustration instead of limitation, RAM can be in a variety of forms such as SRAM (Static Random Access Memory), etc.

The various technical features in the embodiments described above may be combined arbitrarily, for the convenience of description, not all possible combinations of the various technical features in the embodiments described above are described; however, the combinations of these technical features should all be considered as falling within the protection scope of the description as long as they are not contradicted with each other.

Some implementation methods of the present application are described in the embodiments described above, and these implementation modes are described definitely and in detail, but should not be interpreted as limitations to the patent protection scope of the present application. It should be noted that, for the person of ordinary skill in the art, some modifications and improvements can also be made without breaking away from the inventive concept of the present application, and these modifications and improvements are all included in the protection scope of the present application. Thus, the protection scope of the present application should be determined by the annexed claims.

## Claims

1. A method for rendering GIS point data, **characterized in that**, the method comprises:
receiving a rendering instruction that carries a geographic region range to be rendered;
selecting GIS point data corresponding to the geographic region range;
generating a canvas object corresponding to the selected GIS point data in a canvas object generation thread; and
displaying the generated canvas object on a current screen in a display thread, and continuing to obtain a remaining GIS point data, and generating a canvas object corresponding to the remaining GIS point data by the canvas object generation thread, when or after the canvas object is displayed.

2. The method according to claim 1,**characterized in that**, the continuing to obtain the remaining GIS point data and generating the canvas object corresponding to the remaining GIS point data by the canvas object generation thread comprises:
obtaining a new GIS point data from the remaining GIS point data in an ascending order of distance from the geographic region range by execution of the canvas object generation thread; and
generating a new canvas object according to the obtained new GIS point data.

3. The method according to claim 1 or 2, **characterized in that**, the step of an approach of generating the canvas object comprises:
classifying the obtained GIS point data according to a preset classification; and
obtaining a set corresponding to a classification , and selecting a graphic file corresponding to the obtained set; and
encapsulating the graphic file with each GIS point data in the corresponding sets to obtain the canvas object.

4. The method according to claim 1, **characterized in that**, after displaying the generated canvas object on the current screen by the display thread, the method further comprises:
storing the canvas object displayed on the current screen in a memory;
after selecting the corresponding GIS point data according to the geographic region range, the method further comprises :
determining whether the GIS point data corresponding to the geographic region range corresponds to the canvas object stored in the memory; and
reading the corresponding canvas object from the memory directly when the GIS point data corresponding to the geographic region range corresponds to the canvas object stored in the memory, otherwise, continuing to generate the canvas object corresponding to the selected GIS point data by the canvas object generation thread.

5. The method according to claim 4, **characterized in that**, the determining whether the GIS point data corresponding to the geographic region range corresponds to the canvas object stored in the memory comprises:
comparing the geographic region range with a geographic region range corresponding to a stored canvas to obtain an overlapped region;
determining whether there is a GIS point data in the overlapped region; and
extracting, if there is the GIS point data in the overlapped region, the canvas object corresponding to the GIS point data in the overlapped region from the memory and continuing to query whether there exists a canvas object corresponding to a GIS point data in an unoverlapped region in the memory.

6. The method according to claim 4, **characterized in that**, before the determining whether the GIS point data corresponding to the geographic region range corresponds to the canvas object stored in the memory, the method further comprises:
determining whether all canvas objects corresponding to the GIS point data have been generated; and
reading the canvas objects corresponding to the GIS point data from the memory directly, if all canvas objects corresponding to the GIS point data have been generated.

7. The method according to claim 3, **characterized in that**, the method further comprises:
determining, when a zoom instruction is received, a degree of adjustment corresponding to the zoom instruction;
obtaining an original graphic size of each of the graphic files corresponding to the sets;
adjusting the original graphic size according to the degree of adjustment to obtain a new graphic file; and
replacing the original graphic file with the new graphic file.

8. A device for rendering GIS point data, **characterized in that**, the device comprises:
a receiving module configured to receive a rendering instruction, the rendering instruction carries a geographic region range to be rendered;
a selection module configured to select GIS point data corresponding to the geographic region range;
a generation module configured to generate a canvas object corresponding to the selected GIS point data by a canvas object generation thread; and
a display module configured to display the generated canvas object on a current screen in a display thread, and continue to obtain the remaining GIS point data and generate a canvas object corresponding to the remaining GIS point data by the canvas object generation thread, when or after the canvas object is displayed.

9. A computer device, comprising a memory and one or a plurality of processor(s), the memory stores a computer readable instruction, that, when being executed by the one or plurality of processor(s), causes the one or plurality of processor(s) to perform following steps of:
receiving a rendering instruction that carries a geographic region range to be rendered;
selecting GIS point data corresponding to the geographic region range;
generating a canvas object corresponding to the selected GIS point data by a canvas object generation thread; and
displaying the generated canvas object on a current screen in a display thread, and continuing to obtain a remaining GIS point data and generating a canvas object corresponding to the remaining GIS point data by the canvas object generation thread, when or after the canvas object is displayed.

10. The computer device according to claim 9, **characterized in that**, the step of continuing to obtain the remaining GIS point data and generating the canvas object corresponding to the remaining GIS point data by the canvas object generation thread, which is realized by the processor(s) by executing the computer readable instruction, comprises steps of:
obtaining a new GIS point data from the remaining GIS point data in an ascending order of distance from the geographic region range by execution of the canvas object generation thread; and
generating a new canvas object according to the obtained new GIS point data.

11. The computer device according to claim 9 or claim 10, **characterized in that**, an approach of generating the canvas object, which is realized by the processor(s) by executing the computer readable instruction, comprises:
classifying the obtained GIS point data according to a preset classification; and
obtaining a set corresponding to a classification of the obtained GIS point data, and selecting a graphic file corresponding to the obtained sets; and
encapsulating the graphic file with each GIS point data in the set corresponding to the classification to obtain the canvas object.

12. The computer device according to claim 9, **characterized in that**, after displaying the generated canvas object on the current screen by the display thread, the method further comprises:
storing the canvas object displayed on the current screen in a memory;
after selecting the corresponding GIS point data according to the geographic region range,
determining whether the GIS point data corresponding to the geographic region range corresponds to the canvas object stored in the memory; and
reading the corresponding canvas object from the memory directly when the GIS point data corresponding to the geographic region range corresponds to the canvas object stored in the memory, otherwise, continuing to generate the canvas object corresponding to the selected GIS point data by the canvas object generation thread.

13. The computer device according to claim 12, **characterized in that**, the determining whether the GIS point data corresponding to the geographic region range corresponds to the canvas object stored in the memory, which is realized by the processor(s) by executing the computer readable instruction, comprises:
comparing the geographic region range with a geographic region range corresponding to a stored canvas to obtain an overlapped region;
determining whether there is a GIS point data in the overlapped region; and
extracting, if there is the GIS point data in the overlapped region, the canvas object corresponding to the GIS point data in the overlapped region from the memory, and continuing to query whether there exists a canvas object corresponding to a GIS point data in an unoverlapped region in the memory.

14. The computer device according to claim 12, **characterized in that**, before determining whether the GIS point data corresponding to the geographic region range corresponds to the canvas object stored in the memory, the method further comprises:
determining whether all canvas objects corresponding to the GIS point data have been generated; and
reading the canvas objects corresponding to the GIS point data from the memory directly, if all canvas objects corresponding to the GIS point data have been generated.

15. The computer device according to claim 11, **characterized in that**, when executing the computer readable instruction, the processor(s) is/are further configured to perform following steps of:
determining, when a zoom instruction is received, a degree of adjustment corresponding to the zoom instruction;
obtaining an original graphic size of each of the graphic files corresponding to the data sets;
adjusting the original graphic size according to the degree of adjustment to obtain a new graphic file; and
replacing the original graphic file with the new graphic file.

16. One or plurality of computer readable storage medium which stores a computer readable instruction, that, when being executed by one or plurality of processor(s), cause the one or plurality of processor(s) to perform following steps of:
receiving a rendering instruction that carries a geographic region range to be rendered;
selecting GIS point data corresponding to the geographic region range;
generating, by a canvas object generation thread, a canvas object corresponding to the selected GIS point data; and
displaying the generated canvas object on a current screen in a display thread, and continuing to obtain a remaining GIS point data and generating a canvas object corresponding to the remaining GIS point data by the canvas object generation thread when or after the canvas object is displayed.

17. The storage medium according to claim 16, **characterized in that**, the continuing to obtain the remaining GIS point data and generating the canvas object corresponding to the remaining GIS point data by the canvas object generation thread, which is realized by the processor(s) by executing the computer readable instruction, comprises steps of:
obtaining a new GIS point data from the remaining GIS point data in an ascending order of distance from the geographic region range by execution of the canvas object generation thread; and
generating a new canvas object according to the obtained new GIS point data.

18. The storage medium according to claim 16 or claim 17, **characterized in that**, an approach of generating the canvas object, which is realized by the processor(s) by executing the computer readable instruction, comprises:
classifying the obtained GIS point data according to a preset classification; and
obtaining a set corresponding to a classification of the obtained GIS point data, and selecting a graphic file corresponding to the obtained set; and
encapsulating the graphic file with each GIS point data in the set corresponding to the classification to obtain the canvas object.

19. The storage medium according to claim 16, **characterized in that**, after the displaying the generated canvas object on the current screen by the display thread, which is realized by the processor(s) by executing the computer readable instruction, the method further comprises:
storing the canvas object displayed on the current screen in a memory;
after selecting the corresponding GIS point data according to the geographic region range, determining whether the GIS point data corresponding to the geographic region range corresponds to the canvas object stored in the memory; and
reading the corresponding canvas object from the memory directly when the GIS point data corresponding to the geographic region range corresponds to the canvas object stored in the memory, otherwise, continuing to generate the canvas object corresponding to the selected GIS point data by the canvas object generation thread.

20. The storage medium according to claim 18, **characterized in that**, the determining whether the GIS point data corresponding to the geographic region range corresponds to the canvas object stored in the memory, which is realized by the processor(s) by executing the computer readable instruction, comprises:
comparing the geographic region range with a geographic region range corresponding to a stored canvas to obtain an overlapped region;
determining whether there is a GIS point data in the overlapped region; and
extracting, if there is the GIS point data in the overlapped region, the canvas object corresponding to the GIS point data in the overlapped region from the memory, and continuing to query whether there exists a canvas object corresponding to a GIS point data in an unoverlapped region in the memory.
